# EUROPÄISCHE PATENTSCHRIFT

(11) **EP 1 077 824 B1**
(45) Veröffentlichungstag und Bekanntmachung des Hinweises auf die Patenterteilung: **27.11.2002**
(21) Anmeldenummer: 99919230.5
(22) Anmeldetag: 14.04.1999
(51) Int. Cl.: B60K 15/03

(54) **KRAFTSTOFFBEHÄLTER**
FUEL TANK
RESERVOIR DE CARBURANT

(30) Priorität: 04.05.1998 DE 19819784
(43) Veröffentlichungstag der Anmeldung: 28.02.2001
(73) Patentinhaber: Siemens Aktiengesellschaft, 80333 München (DE)
(72) Erfinder: ZAPP, Thomas, D-44265 Dortmund (DE); KOCHSMEIER, Christian, D-61476 Kronberg (DE)
(86) Internationale Anmeldenummer: EP9902501
(87) Internationale Veröffentlichungsnummer: WO99056977

(56) Entgegenhaltungen:
- EP-A- 0 799 738
- DE-B- 2 057 612
- FR-A- 2 042 538
- FR-A- 2 596 333
- US-A- 3 632 717
- US-A- 4 405 048

## Beschreibung

Die Erfindung betrifft einen Kraftstoffbehälter mit einem insbesondere bei Wartungsarbeiten zu öffnenden Verschluß, welcher beim Ersteinsatz des Kraftstoffbehälters fest verschlossen ist und Haltemittel für ein Verschlußteil aufweist.

Es ist bereits ein Kraftstoffbehälter für Kraftfahrzeuge bekannt, der an der Unterseite eines Bodenbleches des Kraftfahrzeuges angeordnet ist. Bei diesem zumeist aus Kunststoff hergestellten Kraftstoffbehälter sind verschiedene Bauteile, wie beispielsweise eine Kraftstoffördereinheit, Leitungsetemente und Saugstrahlpumpen angeordnet. Diese Bauteile oder Zusatzeinrichtungen werden bei einem Kraftstoffbehälter durch die Öffnung in den Innenraum des Kraftstoffbehälters eingesetzt. Anschließend wird die Öffnung mittels des Verschlusses dichtend verschlossen, so daß ein Austreten von Kraftstoff ausgeschlossen ist. Durch diese Öffnung kann auch eine Inspektion, bzw. ein Austausch oder eine Reparatur der Einbauteile, insbesondere der Fördereinheit, vorgenommen werden. Die Abdichtung des zumeist mit einem separaten Verschlußdeckel versehenen Kraftstoffbehälters ist dabei derart auszuführen, daß die in den gesetzlichen Vorschriften, vor altem der US-Gesetzgebung, geforderte hohe Permeations-Dichtheit erreicht wird. Hierzu ist es bekannt, den Verschluß nach dem Einsetzen der Einbauten in den Innenraum des Kraftstoffbehälters mit einem Verschlußdeckel zu versehen, welcher mit dem Kraftstoffbehälter verschweißt oder verklebt wird und damit in hohem Maße dicht ist (EP 0799 738 A1). Für den Fall, daß der Verschluß geöffnet werden muß, wird der Verschlußdeckel mittels eines Werkzeuges ausgeschnitten, so daß ein darunter liegender Stutzen mit einem daran angeordneten Gewinde sichtbar wird. Nach Abschluß der Wartungsarbeiten wird die Öffnung mittels eines als Ersatzteil verfügbaren Schraubdeckels verschlossen. Die bei einem wiederverwendbaren Verschluß unvermeidbare, relativ geringe Permeations-Dichtheit tritt daher erst bei einem unwahrscheinlichen Wartungs- oder Reparaturfall auf, bei dem der Zugang zum Innenraum des Kraftstoffbehälter erforderlich ist.

EP 799738 offenbart einen Kraftstoffbehälter nach dem Oberbegriff des Anspruchs 1.

Nachteilig bei einem Kraftstoffbehälter der genannten Art ist der zusätzliche Arbeitsgang und die damit verbundenen zusätzlichen Kosten, die durch das Verschweißen des Verschlußdeckels im Anschluß an das Einsetzen der Einbauten in den Innenraum des Kraftstoffbehälter entstehen.

Der Erfindung liegt das Problem zugrunde, einen beim Ersteinsatz fest verschlossenen und anschließend wieder verschließbaren Kraftstoffbehälter der eingangs genannten Art so zu gestalten, daß zu dessen Herstellung kein zusätzlicher Arbeitsaufwand entsteht. Insbesondere soll auf einen mit dem Kraftstoffbehälter zu verschweißenden oder zu verklebenden Verschlußdeckel verzichtet werden.

Dieses Problem wird erfindungsgemäß durch die Merkmale des Anspruchs 1 gelöst. Hierdurch kann der Kraftstoffbehälter zunächst geschlossen ohne die Öffnung hergestellt werden. Erst im Bedarfsfalle wird in diesem Abschnitt beispielsweise durch Ausschneiden oder Ausstanzen eine Öffnung angebracht. Ein zusätzlicher Arbeitsgang zum Verschweißen eines Verschlußdeckels mit dem Kraftstoffbehälter kann hierbei entfallen. Zugleich besitzt die einteilige Verbindung gegenüber nachträglich angebrachten Klebe- oder Schweißverbindungen eine besonders hohe Permeations-Dichtheit. Die im Innenraum des Kraftstoffbehälters anzubringenden Bauteile werden hierzu bereits während des Herstellungsprozesses im Inneren des Kraftstoffbehälters angeordnet, so daß die Öffnung erst dann in den Kraftstoffbehälter eingebracht werden muß, wenn eine Störung vorliegt oder Wartungsarbeiten erforderlich sind. Bei der Herstellung des Kraftstoffbehälters wird die Öffnung hingegen nicht benötigt.

Der Verschluß könnte so ausgeführt sein, daß der beim Anbringen der Öffnung zu entfernende Ausschnitt anschließend wieder dichtend in die Öffnung einsetzbar ist. Eine besonders vorteilhafte Weiterbildung der Erfindung ist jedoch gegeben, wenn das Haltemittel einen Verschlußdeckel aufweist. Hierdurch kann die Öffnung in dem Kraftstoffbehälter problemlos auch ohne entsprechendes Spezialwerkzeug angebracht werden. Die Öffnung kann beispielsweise einfach mittels eines scharfen Schneidwerkzeuges ausgeschnitten werden, wobei lediglich darauf zu achten ist, daß die durch den Verschlußdeckel abgedeckte Fläche nicht überschritten wird.

Zum Verschließen der Öffnung kann der Verschluß einen Wulst zum Aufsetzen eines Stülpdeckels aufweisen. In der Handhabung besonders einfach ist hingegen eine Ausführungsform der Erfindung, bei der der Verschlußdeckel ein Schraubverschluß ist. Mit dem Schraubverschluß läßt sich eine gleichermaßen leicht zu handhabende wie auch in hohem Maße permeationsdichte Ausführung des Verschlusses erreichen. Der hierfür erforderliche Schraubverschluß wird in gleicher Form bereits in der Praxis eingesetzt, so daß hierdurch lediglich unerhebliche zusätzliche Kosten entstehen. Der bisher verwendete Schraubverschluß dient dabei als Ersatz für die beim Öffnen des Verschlusses entfernte Wandungsfläche des Kraftstoffbehälters und ist daher nur in Ausnahmefällen erforderlich. Der Schraubverschluß kann dabei beispielsweise auch bereits werksseitig aufgeschraubt sein, um im Bedarfsfall eine umständliche Beschaffung des Schraubverschlusses als Austauschteil zu vermeiden.

Eine besonders günstige Ausführungsform der Erfindung ist dann gegeben, wenn die Öffnung durch Abtrennen einer gegenüber dem Kraftstoffbehälter hervorspringenden Verschlußkappe erzeugt ist. Dabei läßt sich die Öffnung leicht durch Abschneiden der hervorspringenden Verschlußkappe erreichen, so daß anschließend ein als Rohrstutzen ausgeführtes Leitungselement freiliegt. Ein fehlerhaftes Anbringen der Öffnung, beispielsweise indem die ausgeschnittene Öffnung für den zur Verfügung stehenden Verschlußdeckel zu groß ist, kann dadurch ausgeschlossen werden. Weiterhin kann die Verschlußkappe derart abgewinkelt sein, daß die beim Öffnen des Kraftstoffbehälters zwangsläufig entstehenden Rückstände und Staubpartikel nicht in den Innenraum des Kraftstoffbehälters hineinfallen können und Verstopfungen des Kraftstoffbehälters dadurch vermieden werden.

Eine andere, besonders vorteilhafte Weiterbildung der Erfindung ist dann gegeben, wenn der Verschlußdeckel mit dem abtrennbaren Abschnitt verbunden ist. Dadurch entfällt die für einen Reparaturbetrieb erforderliche Lagerhaltung eines zum Verschließen der Öffnung erforderlichen Austauschteiles. Das beispielsweise als Verschlußdeckel ausgeführte Haltemittel ist dabei bereits an dem Abschnitt vorgesehen und braucht lediglich entsprechend an dem Verschluß angebracht werden.

Hierbei ist es besonders günstig, wenn der Abschnitt einen Abreißring hat. Solche bereits bei Getränkeflaschen als Nachweis für einen ungeöffneten Originalzustand verwendeten Abreißringe unterstützen auch die Abdichtung des wiederverwendbaren Verschlußdeckels. Bei der Erstausrüstung des Kraftfahrzeuges ist der Abreißring sowohl mit dem Verschlußdeckel als auch mit dem Kraftstoffbehälter fest verbunden. Beim Öffnen des Verschlußdeckels wird der Abreißring sowohl von dem Kraftstoffbehälter als auch von dem Verschlußdeckel gewaltsam abgetrennt und kann anschließend nicht wiederverwendet werden. Der Verschlußdeckel ist hingegen wiederverwendbar und wird anschließend unmittelbar mit dem Kraftstoffbehälter dichtend verschraubt. Diese Ausführungsform erfordert gegenüber bekannten Kraftstoffbehältern lediglich sehr geringe Veränderungen und ist daher mit unwesentlichem Aufwand zu realisieren. Der Benutzer führt zum Öffnen des Kraftstoffbehälters die gegenüber herkömmlichen Verschlüssen unveränderten Handgriffe aus, wodurch eine fehlerhafte Bedienung weitgehend ausgeschlossen ist.

Die Erfindung läßt verschiedene Ausführungsformen zu. Zur weiteren Verdeutlichung ihres Grundprinzips ist eine davon in der Zeichnung dargestellt und wird nachfolgend beschrieben. Diese zeigt in
- Figur 1: eine seitliche, geschnittene Darstellung eines erfindungsgemäßen Kraftstoffbehälters und eines Verschlußdeckels,
- Figur 2: den Kraftstoffbehälter mit einer Öffnung und den aufgeschraubten Verschlußdeckel,
- Figur 3: den Kraftstoffbehälter mit einer abtrennbaren Verschlußkappe,
- Figur 4: den Kraftstoffbehälter mit einem mittels Abreißring aufgesetzten Verschlußdeckel.

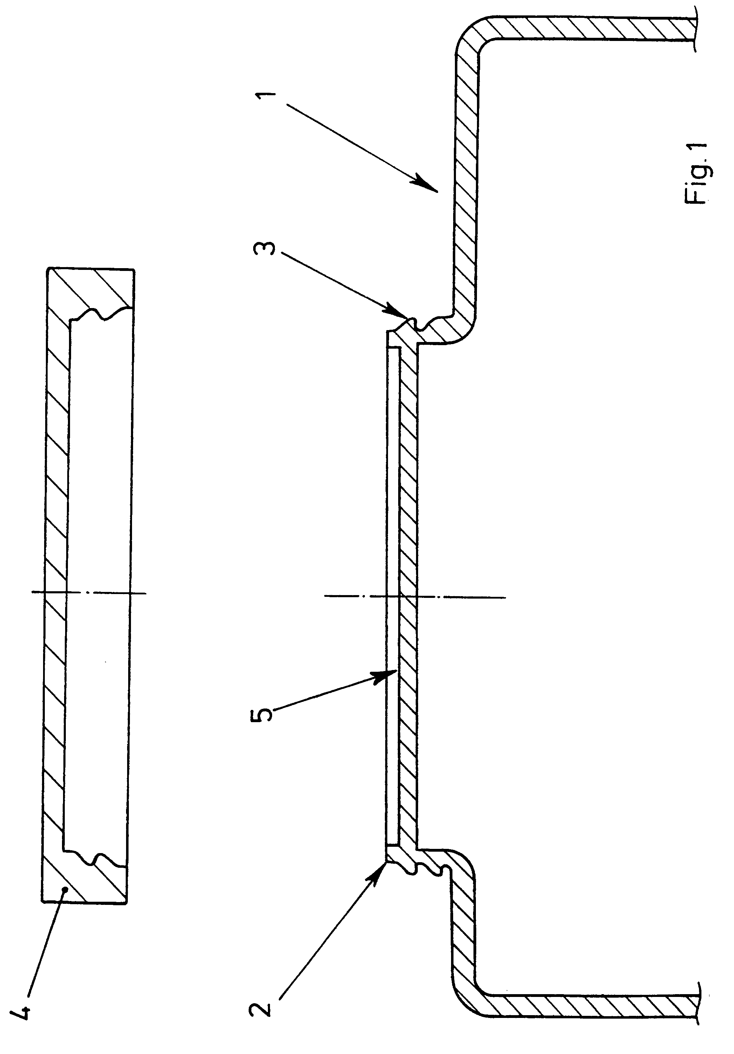

Figur 1 zeigt eine geschnittene Seitenansicht eines lediglich abschnittsweise dargestellten Kraftstoffbehälters 1 mit einem Verschluß 2. Der Verschluß 2 hat ein als Außengewinde ausgeführtes Haltemittel 3 zum Aufschrauben eines als Schraubverschluß ausgeführten Verschlußdeckels 4. Der Verschluß 2 hat weiterhin einen Abschnitt 5, welcher den Kraftstoffbehälter 1 verschließt. Hierbei ist der Kraftstoffbehälter 1 mit dem Verschluß 2 und seinem Abschnitt 5 einteilig ausgeführt und besitzt daher eine hohe Permeations-Dichtheit. Der Verschlußdeckel 4 ist als separates Bauteil ausgeführt und kann zum Schutz gegen Verlust mit dem Kraftstoffbehälter 1 oder dem Verschluß 2 verbunden sein oder lediglich im Bedarfsfall als Ersatzteil zu beziehen sein.

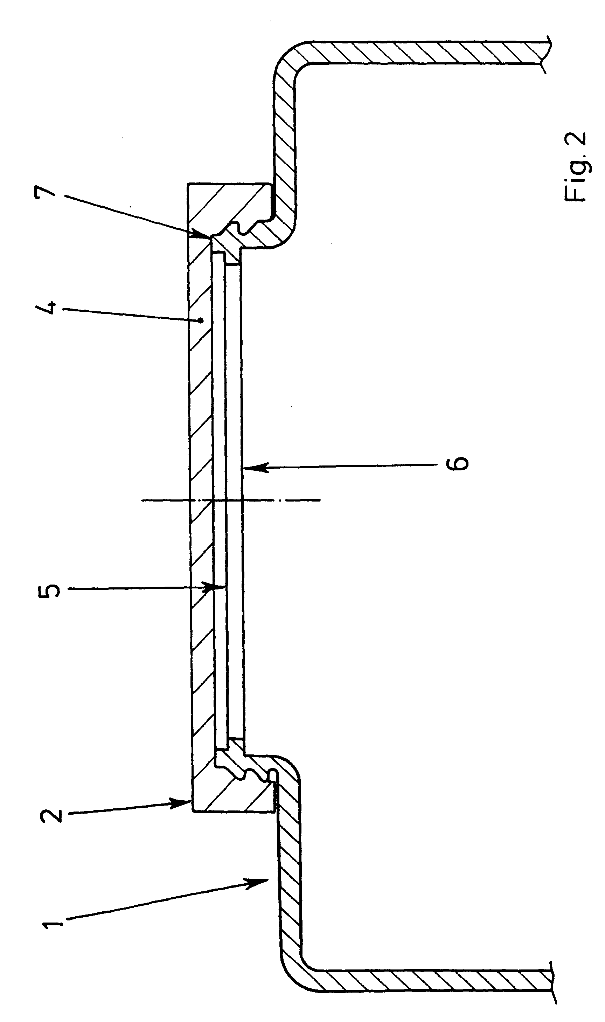

Figur 2 zeigt eine geschnittene Seitenansicht des abschnittsweise dargestellten Kraftstoffbehälters 1 mit dem Verschluß 2 und dem darauf aufgeschraubten Verschlußdeckel 4. Der Verschlußdeckel 4 liegt in der dargestellten Position gegen einen als Dichtung ausgeführten oberen Rand 7 des Verschlusses 2 an. In den Abschnitt 5 ist hierbei eine Öffnung 6 eingeschnitten, so daß bei abgeschraubtem Verschlußdeckel 4 ein ungehinderter Zugang zum Innenraum des Kraftstoffbehälters 1 möglich ist.

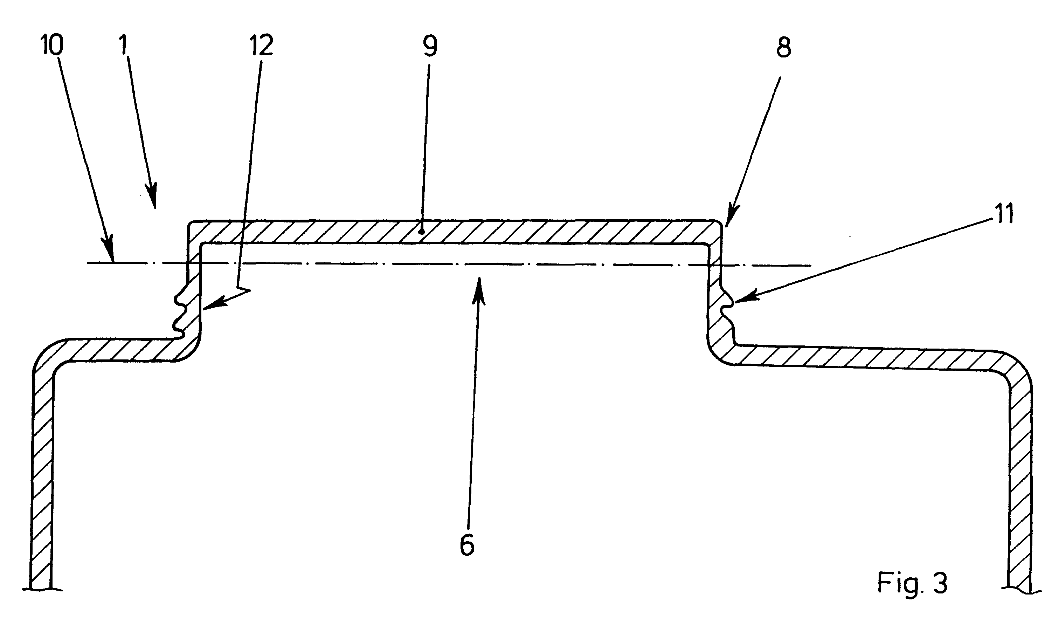

Figur 3 zeigt den Kraftstoffbehälter 1 mit einem Verschluß 8, welcher eine Verschlußkappe 9 aufweist. Die in etwa entlang einer gestrichelt dargestellten Trennlinie 10 abtrennbare Verschlußkappe 9 ist einteilig mit dem Kraftstoffbehälter 1 verbunden und nicht wieder verwendbar. Unterhalb der Trennlinie 10 besitzt der Verschluß 8 ein als Gewinde ausgeführtes Haltemittel 11 zum Aufschrauben eines beispielsweise in den Figuren 1 und 2 dargestellten Schraubdeckels. Durch die im Wesentlichen parallel zur Öffnung 6 verlaufende Trennlinie 10 ist die Begrenzungsfläche 12 der Öffnung 6 bereits werksseitig festgelegt und erfordert daher keine Schablone oder spezielle Werkzeuge.

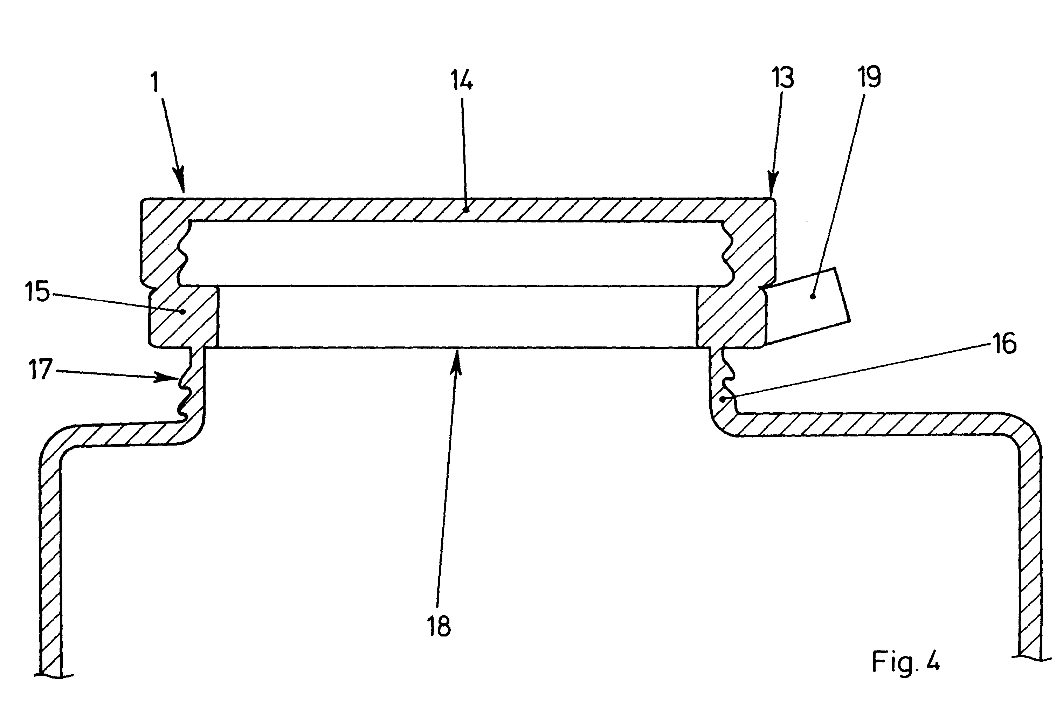

Figur 4 zeigt den Kraftstoffbehälter 1 mit einem Verschluß 13. Der Verschluß 13 hat hierbei im Wesentlichen drei Abschnitte. Der obere Abschnitt des Verschlusses 13 ist als Verschlußdeckel 14 ausgeführt. Dieser ist einteilig mit einem Abreißring 15 verbunden, welcher wiederum mit einem Stutzen 16 verbunden ist, der ein auf den Verschlußdeckel 14 abgestimmtes, als Außengewinde ausgeführtes Haltemittel 17 trägt. Zum Anbringen der Öffnung 6 wird der Abreißring 15 mittels einer Abreißschlaufe 19 von dem Verschlußdeckel 14 und dem Stutzen 16 getrennt. Anschließend kann der Verschlußdeckel 14 auf den Stutzen 16 aufgeschraubt werden. Durch diese Ausführung ist der zum Verschließen der Öffnung 18 erforderliche Verschlußdeckel 14 griffbereit und unverlierbar mit dem Verschluß 13 verbunden und muß daher nicht als Ersatzteil beschafft werden.

## Patentansprüche

1. Kraftstoffbehälter (1) mit einem insbesondere zu Wartungsarbeiten zu öffnenden Verschluß (2, 8, 13) zum Verschließen einer Öffnung (6), welcher beim Ersteinsatz des Kraftstoffbehälters (1) fest verschlossen ist und Haltemittel (3, 11, 17) für ein Verschlußteil (4, 9, 14) aufweist, wobei die Haltemittel (3, 11, 17) einteilig mit dem Kraftstoffbehälter (1) ausgebildet sind, **dadurch gekennzeichnet, daß** der Verschluß (2, 8, 13) beim Ersteinsatz des Kraftstoffbehälters (1) einen einteilig mit dem Kraftstoffbehälter (1) ausgebildeten und zum Anbringen der Öffnung (6) vorgesehenen Abschnitt (5) hat.

2. Kraftstoffbehälter nach Anspruch 1, **dadurch gekennzeichnet, daß** die Haltemittel (3, 17) einen Verschlußteil (4, 14) aufweisen.

3. Kraftstoffbehälter nach Anspruch 2, **dadurch gekennzeichnet, daß** der Verschlußteil (4, 14) ein Schraubverschluß ist.

4. Kraftstoffbehälter nach zumindest einem der vorhergehenden Ansprüche, **dadurch gekennzeichnet, daß** die Öffnung (6) durch Abtrennen einer gegenüber dem Kraftstoffbehälter (1) hervorspringenden Verschlußkappe (9) erzeugt ist.

5. Kraftstoffbehälter nach zumindest einem der vorhergehenden Ansprüche, **dadurch gekennzeichnet, daß** der Verschlußteil (14) mit dem abtrennbaren Abschnitt (5) verbunden ist.

6. Kraftstoffbehälter nach zumindest einem der vorhergehenden Ansprüche, **dadurch gekennzeichnet, daß** der Abschnitt (5) einen Abreißring (15) hat.

## Claims

1. Fuel tank (1) having a closure (2, 8, 13) for closing an opening (6), which closure can be opened, in particular, for maintenance work and which is permanently closed at first use of the fuel tank (1) and has holding means (3, 11, 17) for a closure part (4, 9, 14), the holding means (3, 11, 17) being designed integrally with the fuel tank (1), **characterized in that** the closure (2, 8, 13) at first use of the fuel tank (1) has a section (5) which is designed integrally with the fuel tank (1) and is provided for the insertion of the opening (6).

2. Fuel tank according to Claim 1, **characterized in that** the holding means (3, 17) have a closure part (4, 14).

3. Fuel tank according to Claim 2, **characterized in that** the closure part (4, 14) is a screw-type closure.

4. Fuel tank according to at least one of the preceding claims, **characterized in that** the opening (6) is produced by detaching a closure cap (9) which protrudes with respect to the fuel tank (1).

5. Fuel tank according to at least one of the preceding claims, **characterized in that** the closure part (14) is connected to the detachable section (5).

6. Fuel tank according to at least one of the preceding claims, **characterized in that** the section (5) has a tear-off ring (15).

## Revendications

1. Réservoir à carburant (1) doté d'un dispositif de fermeture (2, 8, 13) servant à fermer une ouverture (6) et dont il faut, notamment lors de travaux d'entretien, procéder à l'ouverture, ledit dispositif de fermeture étant hermétiquement fermé lors de l'utilisation du réservoir à carburant (1) en son état d'origine et présentant des moyens de fixation (3, 11, 17) destinés à recevoir un élément d'obturation (4, 9, 14), les moyens de fixation (3, 11, 17) formant une seule pièce avec le réservoir à carburant (1), **caractérisé en ce que** le dispositif de fermeture (2, 8, 13) est doté, lors de l'utilisation du réservoir à carburant (1) en son état d'origine, d'une partie (5) qui forme une seule pièce avec le réservoir à carburant (1) et qui permet la réalisation de l'ouverture (6).

2. Réservoir à carburant selon la revendication 1, **caractérisé en ce que** les moyens de fixation (3, 11, 17) présentent un élément d'obturation (4, 14).

3. Réservoir à carburant selon la revendication 2, **caractérisé en ce que** l'élément d'obturation (4, 14) est un bouchon fileté.

4. Réservoir à carburant selon au moins une des revendications précédentes, **caractérisé en ce que** la mise à nu de l'ouverture (6) est provoquée par la découpe d'un chapeau-obturateur (9) en saillie par rapport au réservoir à carburant (1).

5. Réservoir, à carburant selon au moins une des revendications précédentes, **caractérisé en ce que** l'élément d'obturation (14) est relié à la partie séparable (5).

6. Réservoir à carburant selon au moins une des revendications précédentes, **caractérisé en ce que** la partie (5) est dotée d'une bague de rupture (15).
